# EUROPEAN PATENT APPLICATION

(11) **EP 2 915 963 A1**
(43) Date of publication of application: **09.09.2015**
(21) Application number: 14157782.5
(22) Date of filing: 05.03.2014
(51) Int. Cl.: F01K 13/00, F01K 23/10, F02C 3/34, F23C 9/00

(54) **Cogeneration plant and method to operate a cogeneration plant**

(71) Applicant: Siemens Aktiengesellschaft, 80333 München (DE)
(72) Inventor: Raadeklint, Ulf, 60370 Norrköping (SE)

(57) **Abstract**

The present invention is related to a cogeneration plant (1) comprising a gas turbine engine (10), a heat recovery steam generator (17) and a division module (21) forming a semi-closed carbon dioxide cycle (22) of the cogeneration plant (1), the cogeneration plant (1) burning a mixture of fuel (40), oxygen (41) and a recirculated first flow of combustion gas (45) in a combustor (11) of the gas turbine engine (10), the heat recovery steam generator (17) arranged downstream of the gas turbine engine (10) receiving combustion gas (44) of the gas turbine engine (10) and the division module (21) arranged downstream of the heat recovery steam generator (17) dividing the combustion gas (44) into the first flow of combustion gas (45) recirculated to the gas turbine engine (10) and a second flow of combustion gas (46) for a generation (23) of carbon dioxide (42). Further, the invention is related to a method to operate a cogeneration plant (1).

## Description

The present invention is related to a cogeneration plant comprising a gas turbine engine, a heat recovery steam generator and a division module forming a semi-closed carbon dioxide cycle of the cogeneration plant, the cogeneration plant burning a mixture of fuel, oxygen and a recirculated first flow of combustion gas in a combustor of the gas turbine engine, the heat recovery steam generator arranged downstream of the gas turbine engine receiving combustion gas of the gas turbine engine and the division module arranged downstream of the heat recovery steam generator dividing the combustion gas into the first flow of combustion gas recirculated to the gas turbine engine and a second flow of combustion gas for a generation of carbon dioxide. Further, the invention is related to a method to operate a cogeneration plant.

Power generation systems and respective methods to operate such systems, especially cogeneration plants and respective methods to operate cogeneration plants, are known for a long time since mechanical power or electrical power is generated especially by burning a fuel with an oxygen containing gas. Recently concerns come up about carbon dioxide content in air increasing up to an amount where a so-called greenhouse effect might occur. Due to this increasing awareness to climate relevant emissions a lot of effort is undertaken to minimize the emission of carbon dioxide, which is thought to be one of the most relevant reasons for the increase of the world's temperature respectively the greenhouse effect. Latest developments led to cogeneration cycles having zero emission and a higher efficiency. Within such cycles fossil fuels are burned with pure oxygen, which enables the separation of the carbon dioxide, generated during the oxidation, in a cost effective way by condensation of the H₂O-fraction of the combustion gas. By burning a fuel with an oxygen containing gas other than air it is possible to avoid the generation of NOX (nitrogen oxides) and to avoid the mixture of essential inert components with the carbon dioxide generated during combustion to more easily enable the separation of carbon dioxide from the combustion gas generated. This easy separation simplifies storage of pure carbon dioxide in a final storage capacity. Essentially pure carbon dioxide can further better be used for subsequent chemical processes. The increased cycle efficiencies compensate at least partly the efforts for the supply of pure oxygen undertaken in an upstream air separation module. This cycle becomes a zero emission cycle if the separated carbon dioxide is stored at an adequate location.

During the operation of a cogeneration plant the starting procedure of such an operation of the cogeneration plant is still an issue. At the beginning of the operation of the cogeneration plant the components of the cogeneration plant including flow connections as part of the cogeneration plant can at least partly be filled with air. Therefore at the beginning of the operation of the cogeneration plant nitrogen oxides might be produced and/or the separation of pure carbon dioxide out of the combustion gas is hindered up to the point where such a separation of pure carbon dioxide is impossible. At the worst these condition stay unchanged during the operation of the cogeneration plant.

It is an object of the present invention to solve the aforesaid problems at least partly. In particular, it is an object of the present invention to provide a cogeneration plant and a method to operate a cogeneration plant, which allow an environmental friendly operation of the cogeneration plant right from the beginning of an operation of the cogeneration plant in an easy and cost efficient way.

The aforesaid problems are solved by a cogeneration plant according to independent claim 1 and by a method to operate a cogeneration plant according to claim 8. Further features and details of the present invention result from the sub-claims, the description and the drawings. Features and details discussed with respect to the cogeneration plant can also be applied to the method to operate a cogeneration plant and vice versa, if of technical sense.

According to a first aspect of the invention the afore cited object is achieved by a cogeneration plant comprising a gas turbine engine, a heat recovery steam generator and a division module forming a semi-closed carbon dioxide cycle of the cogeneration plant, the cogeneration plant burning a mixture of fuel, oxygen and a recirculated first flow of combustion gas in a combustor of the gas turbine engine, the heat recovery steam generator arranged downstream of the gas turbine engine receiving combustion gas of the gas turbine engine and the division module arranged downstream of the heat recovery steam generator dividing the combustion gas into the first flow of combustion gas recirculated to the gas turbine engine and a second flow of combustion gas for a generation of carbon dioxide. The cogeneration plant according to the invention is characterized in that the cogeneration plant comprises an additional storage tank to store carbon dioxide and a first flow connection, wherein the additional storage tank is connected at least to the semi-closed carbon dioxide cycle using the first flow connection, wherein the semi-closed carbon dioxide cycle can be filled at least partly with carbon dioxide provided by the additional storage tank.

The semi-closed carbon dioxide cycle according to the invention comprises at least the gas turbine engine, the heat recovery steam generator, the divisional module and the corresponding flow connections. The semi-closed carbon cycle according to the invention is semi-closed in that sense that during operation of the cogeneration plant it still can be possible to take out some gas of the cycle. This is advantageous because to maintain pressure levels constant during a steady state operation and it can be necessary to adjust the amount of gas in the cycle. It is closed in that sense that carbon dioxide can circulate in it and cycle it consecutively many times. All these parts of the semi-closed carbon dioxide cycle can be filled at least partly with carbon dioxide provided by the additional storage tank via the first flow connection. This filling can preferably be done before the operation of the cogeneration plant, especially before the gas turbine engine starts into operation. The filling of the semi-closed carbon dioxide cycle with carbon dioxide provided by the additional storage tank causes that preferably already at the beginning of an operation of the cogeneration plant only or at least predominantly carbon dioxide is present in the semi-closed carbon dioxide cycle. Due to the fact that only oxygen, especially high purity oxygen up to pure oxygen, is used to burn the fuel in the combustor of the gas turbine engine, the combustion gas predominantly contains carbon dioxide and at least water. Small contributions of other constituents like Argon for instance are also possible but negligible in the majority of cases. Therefore the extraction of carbon dioxide from the combustion gas can start immediately after the beginning of the operation of the cogeneration plant. A zero emission operation of the cogeneration plant is already possible right after the start of the operation of the cogeneration plant. This allows enhancing the environment-friendliness of the operation of the cogeneration plant. Especially no or only minor amounts of nitrogen oxides are produced in a cogeneration plant according to the invention. Especially by storing of carbon dioxide generated out of the second flow of combustion gas an essentially zero emission operation of the cogeneration plant according to the invention is possible throughout the whole operation cycle of the cogeneration plant.

Further, a cogeneration plant according to the invention can be characterized in that the cogeneration plant comprises a first control valve positioned in the first flow connection, wherein the first control valve controls the filling of the semi-closed carbon dioxide cycle with carbon dioxide. The first control valve can control the release of carbon dioxide out of the additional storage tank into the semi-closed carbon dioxide cycle. It can be closed during a shutdown period of the cogeneration plant and therefore effectively ensure that stored carbon dioxide is kept inside the additional storage tank. For a filling of the semi-closed carbon dioxide cycle with carbon dioxide stored in the additional storage tank the first control valve can be opened and the stored carbon dioxide can flow via the first flow connection into the semi-closed carbon dioxide cycle. To enhance the flow of the carbon dioxide out of the additional storage tank into the semi-closed carbon dioxide cycle, the carbon dioxide in the additional storage tank can be pressurized. Such a first control valve is therefore an especially easy and safe way to ensure the filling of the semi-closed carbon dioxide cycle, wherein in addition, unless an opening of the semi-closed carbon dioxide cycle is necessary for service, no loss of carbon dioxide during a shutdown period of the cogeneration plant has to be suffered.

In a further advanced arrangement of a cogeneration plant according to the invention, the cogeneration plant comprises a second flow connection between a compressor section of the gas turbine engine and the additional storage tank, wherein during the operation of the cogeneration plant the additional storage tank can be filled with carbon dioxide through the second flow connection. The compressor of the gas turbine engine is preferably the part of the gas turbine engine, whose inlet is connected to the semi-closed carbon dioxide cycle. Preferably, the entrance point of a flow connection of the semi-closed carbon dioxide cycle into the gas turbine engine is the beginning of the compressor section. Therefore at the exit of the compressor section, compressed carbon dioxide is provided. With this compressed carbon dioxide the additional storage tank can be filled very easily. Already a small bleed of carbon dioxide from the compressor section of the gas turbine engine connected via the second flow connection to the additional storage tank can be enough for the filling of the additional storage tank. This filling of the additional storage tank can be carried out in such an efficient way, that no additional filling of the additional storage tank is needed. Preferably the pressure of the carbon dioxide in the additional storage tank is kept slightly lower than a pressure reached at the end of the compressor section of the gas turbine engine. Therefore a reflux of carbon dioxide out of the additional storage tank into the compressor section of the gas turbine engine and an accompanying drop in efficiency of the operation of the gas turbine engine coming along with this can be avoided.

In addition, a cogeneration plant according to the invention can be characterized in that the cogeneration plant comprises a second control valve positioned in the second flow connection, wherein the second control valve controls the filling of the additional storage tank with carbon dioxide. Also the second control valve can be closed during a shutdown period of the cogeneration plant. Carbon dioxide already stored in the additional storage tank is therefore kept in the additional storage tank until the next start of an operation of the cogeneration plant. The second control valve can be opened for a filling of the additional storage tank during the operation of the cogeneration plant. Preferably the second control valve is only opened if the pressure in the compressor section of the gas turbine engine is highest or at least higher than the pressure in the additional storage tank. A second control valve arranged in the second flow connection is an especially easy and safe way to ensure that a loss of carbon dioxide during a shutdown period of the cogeneration plant is hindered and to ensure that the filling of the additional storage tank out of the compressor section of the gas turbine engine can be controlled.

Further, a cogeneration plant according to the invention can be characterized in that the semi-closed carbon dioxide cycle, especially the heat recovery steam generator, comprises a third control valve for bleeding air during the filling process with carbon dioxide from the additional storage tank. As mentioned above, before the filling with carbon dioxide coming from the additional storage tank, the semi-closed carbon dioxide cycle and its parts can be filled at least partly with air. A third control valve allows a controlled dumping of this air for instance into the environment. Additionally, sensors can be provided to measure a carbon dioxide content in the dumped air. If the carbon dioxide content in the dumped air reaches a certain amount, a closure of the third control valve can be initiated. A dumping of carbon dioxide into the environment can therefore easily be prohibited.

In addition, a cogeneration plant according to the invention can be characterized in that the first flow connection is connected to the semi-closed carbon dioxide cycle at a low point. A low point according to the invention means especially a connection point at or at least near the bottom of the semi-closed carbon dioxide cycle. One of the features of carbon dioxide is that carbon dioxide is heavier than most of the components of air. By starting the filling of the semi-closed carbon dioxide cycle at a low point of the semi-closed carbon dioxide cycle the carbon dioxide pushes the air in the semi-closed carbon dioxide cycle aside in an upward direction. This allows a filling of the semi-closed carbon dioxide cycle in an especially effective way.

In a further advanced arrangement of a cogeneration plant according to the invention, the additional storage tank can be filled with carbon dioxide generated from the second flow of combustion gas. A cogeneration plant according to the invention can generate carbon dioxide, especially out of the second flow of combustion gas. This generated carbon dioxide can be stored, allowing an effective zero emission operation of the cogeneration plant. The usage of such generated carbon dioxide to fill the additional storage tank is a very easy and especially cost efficient way to provide carbon dioxide for the additional storage tank. Preferably, no additional carbon dioxide has to be provided and especially be purchased.

According to a second aspect of the invention, the object of the invention is solved by a method to operate a cogeneration plant, the cogeneration plant comprising features of a cogeneration plant according to the first aspect of the invention. A method to operate a cogeneration plant is characterized in that a starting procedure of the operation of the cogeneration plant includes the following step:
- Filling of the semi-closed carbon dioxide cycle at least partly with carbon dioxide, especially with pressurized carbon dioxide from the additional storage tank.

The usage of a cogeneration plant according to the first aspect of the invention provides the same advantages which have been discussed in detail according to a cogeneration plant according to the first aspect of the invention. Further, filling the semi-closed carbon dioxide cycle in advance of an operation of the cogeneration plant allows a zero emission operation of this cogeneration plant right from the beginning of such an operation of a cogeneration plant. Therefore, a filling of the semi-closed carbon dioxide cycle is preferably done before a start of an operation of a gas turbine engine of the cogeneration plant. It is especially preferred to carry out the filling step as one of the first steps of the starting procedure of the operation of the cogeneration plant. By doing so, it can be ensured that a zero emission operation of the cogeneration plant can be achieved already from a beginning of the operation of the cogeneration plant. By filling the semi-closed carbon dioxide cycle at least partly with carbon dioxide, a separation of carbon dioxide in the second flow of combustion gas can be done right at the start of the operation of the cogeneration plant. No time delay has to be suffered.

In addition, a method to operate a cogeneration plant according to the invention can be characterized in that the semi-closed carbon dioxide cycle is filled with carbon dioxide from the additional storage tank from bottom or essentially from bottom to top. Carbon dioxide has the feature that it is heavier than most components of normal air. A filling of the semi-closed carbon dioxide cycle from bottom or essentially from bottom to top is an especially easy way to ensure that no air remains in the semi-closed carbon dioxide cycle.

In a further advanced arrangement of a method to operate a cogeneration plant, the filling of the semi-closed carbon dioxide cycle with carbon dioxide from the additional storage tank can additionally be continued during the operation of the cogeneration plant. During the operation of the cogeneration plant, especially right after the beginning of the operation, a pressure in the semi-closed carbon dioxide cycle increases. An additional continued filling of the semi-closed carbon dioxide cycle during the operation of the cogeneration plant can counterbalance this rise in pressure. A secure and efficient operation of the cogeneration plant can therefore be ensured at all times.

Further, a method to operate a cogeneration plant according to the invention can be characterized in that a pressure of the carbon dioxide in the additional storage tank is kept lower than a maximum pressure reached in the gas turbine engine during nominal operation. The driving force of the flow of carbon dioxide in the semi-closed carbon dioxide cycle should be the combustion gas of the gas turbine engine. Otherwise, the efficiency of an operation of the gas turbine engine may be lowered. By keeping the pressure in the additional storage tank lower than a maximum pressure reached in the gas turbine engine during nominal operation, it can be ensured that the pressure in the additional storage tank is lower than the pressure in the gas turbine engine. No loss in efficiency in the operation of the gas turbine engine has therefore to be suffered.

In addition, a method to operate a cogeneration plant according to the invention can be characterized in that the carbon dioxide filled in the semi-closed carbon dioxide cycle is heated, especially by a heater arranged in the semi-closed carbon dioxide cycle, before entering the gas turbine engine. After the heat recovery steam generator and especially after a scrubber/condenser unit, the temperature of the carbon dioxide in the semi-closed carbon dioxide cycle might be low. This enlarges the possibility of a condensation of water vapour present in the gas stream in the semi-closed carbon dioxide cycle onto droplets. Such water droplets are unwanted at the compressor intake of the gas turbine engine. Especially, such water droplets can cause damage on the compressor blades.. Therefore, to avoid such danger for the compressor caused by water droplets a heating of the carbon dioxide prior to the compressor section can be useful. In such a heater arranged in the semi-closed carbon dioxide cycle waste heat of the heat recovery steam generator might be used. Therefore, the overall efficiency of the cogeneration plant according to the invention can be increased.

The present invention is descripted with respect to the accompanied figures. The figures show schematically:
Fig. 1 a cogeneration plant according to prior art and
Fig. 2 a cogeneration plant according to the invention.

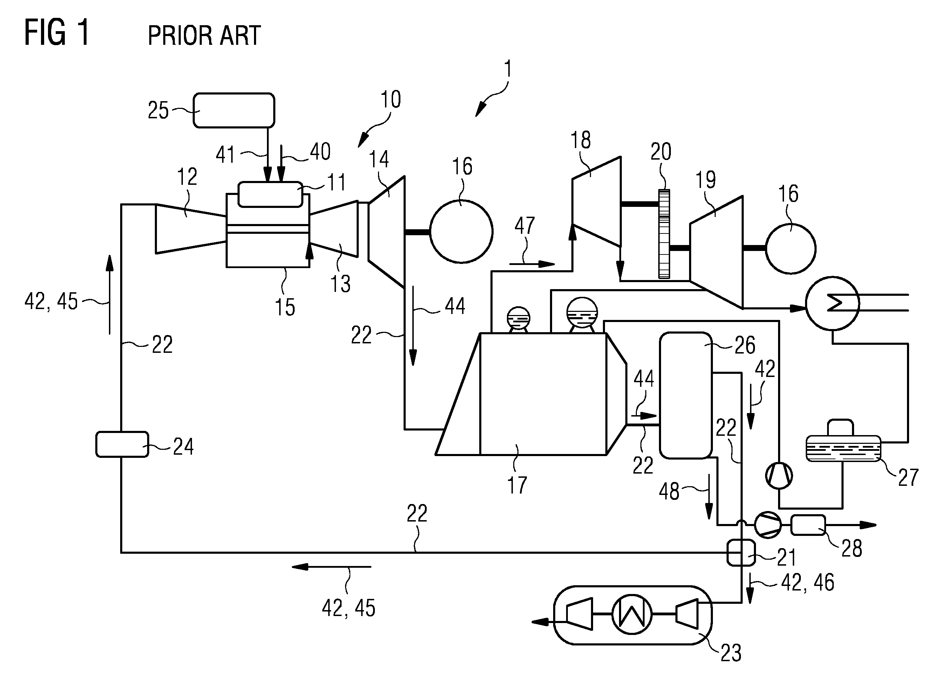

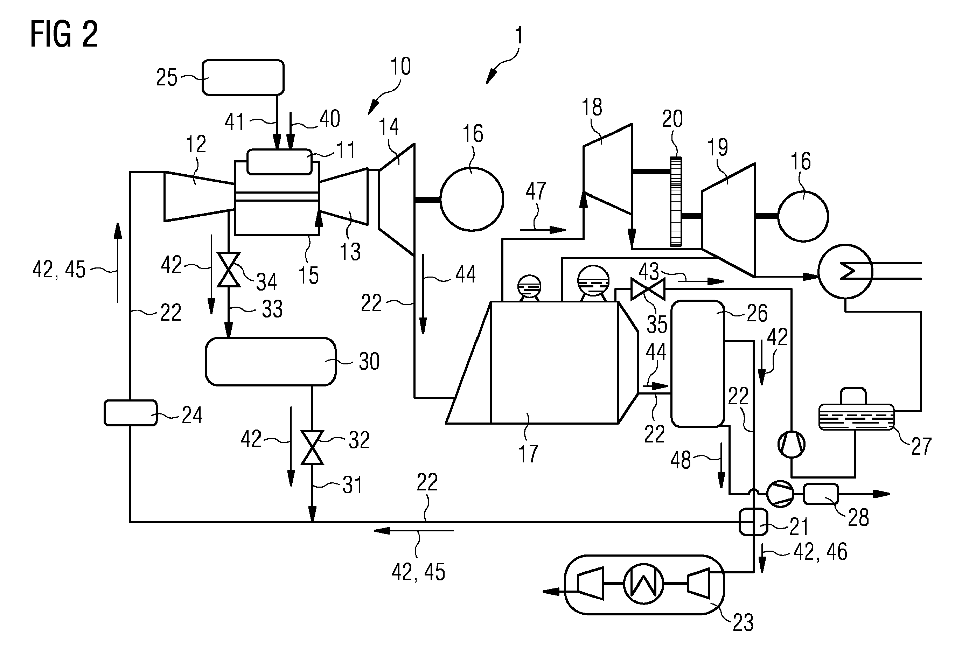

Elements having the same functions and mode of action are provided in fig. 1 and 2 with the same reference signs.

Fig. 1 shows a possible embodiment of a cogeneration plant 1 according to prior art. This cogeneration plant 1 comprises a gas turbine engine 10, a heat recovery steam generator 17, a scrubber/condenser unit 26, a division module 21 and a heater 24 arranged to form a semi-closed carbon dioxide cycle 22. Not all of these parts are necessary for an operational cogeneration plant 1, for instance the heater 24 might be optional. The gas turbine engine 10 comprises a compressor section 12, a combustor 11, a first 13 and a second turbine section 14. Of course the first 13 and second turbine section can be combined in a single turbine section 13, 14. In addition, the gas turbine engine 10 comprises an internal cooling 15. In the combustor 11 of the gas turbine engine 10 fuel 40 is burned with oxygen 41, especially high purity oxygen up to pure oxygen, and mainly carbon dioxide 42 provided by the semi-closed carbon dioxide cycle 22. The pure oxygen 41 is provided by an oxygen treatment plant 25 or an oxygen separation plant 25. The combustion gas 44 produced in the combustor 11 drives the first 13 and the second turbine section 14, wherein the first turbine section 13 is driving the compressor section 12 and the second turbine section 14 is driving a generator 16 to generate electrical power. To use the waste heat of the combustion gas 44 the combustion gas 44 is afterwards led to a heat recovery steam generator 17 arranged downstream along the semi-closed carbon dioxide cycle 22 of the gas turbine engine 10. In the heat recovery steam generator 17 steam 47, especially super-heated steam 47, is produced by transferring the heat of the combustion gas 44 to the steam 47. The steam 47 is used in a high pressure 18 and a low pressure steam turbine 19, the steam turbines 18, 19 connected by a steam turbine gear 20, to drive another generator 16 to produce electrical power. After the heat recovery steam generator 17 the chilled combustion gas 44 flows via the semi-closed carbon dioxide cycle 22 into a scrubber/condenser unit 26. In this scrubber/condenser unit 26 water 48 and gaseous components, mainly carbon dioxide 42, are separated. The water 48 is afterwards treated in a water polish plant 28 and the cleaned water 48 can be afterwards used for other purposes inside or outside the cogeneration plant 1. The carbon dioxide 42 is divided afterwards in a division module 21 arranged downstream of the scrubber/condenser unit 26 in the semi-closed carbon dioxide cycle 22. A second flow of combustion gas 46, essentially comprising pure carbon dioxide 42, is led to a generation of carbon dioxide 23 in which the carbon dioxide 42 is compressed and/or condensed and/or liquefied. The other branch leaving the division module 21 is a first flow of combustion gas 45 also essentially comprising pure carbon dioxide 42. This part of the semi-closed carbon dioxide 22 leads to a heater 24 in which the carbon dioxide 42 is heated before once again entering the compressor section 12 of the gas turbine engine 10. By storing the carbon dioxide 42 compressed and/or liquefied after the generation of carbon dioxide 23 an essential zero emission operation of the cogeneration plant 1 according to prior art can be achieved. The deaerator 27 is used to ensure that gaseous contaminants are taken away from the pure water/steam flow 47, 48 in the steam turbine cycle 19, 20.

In fig. 2 a cogeneration plant 1 according to the invention is shown. In addition to the features of a cogeneration plant 1 according to prior art, as described according to fig. 1, a cogeneration plant 1 according to the invention comprises an additional storage tank 30. This additional storage tank is able to store carbon dioxide 42 and via a first flow connection 31 this carbon dioxide 42 can be filled into the semi-closed carbon dioxide cycle 22. The flow of carbon dioxide 42 in the first flow connection 31 is controlled by a first control valve 32. If the first control valve 32 is opened, carbon dioxide 42, which is kept in the additional storage tank 30 in an especially pressurized manner, is released into the semi-closed carbon dioxide cycle 22. Additionally, the pictured cogeneration plant 1 according to the invention comprises a second flow connection 33 between the compressor section 12 and the additional storage tank 30. This second flow connection 33 is controlled by a second control valve 34. Especially, the compressor section 12 compresses carbon dioxide 42 which is provided by the semi-closed carbon dioxide cycle 22. The pressure in the additional storage tank 30 is preferably kept at least slightly under the nominal pressure reached in the compressor section 12. A small bleed of carbon dioxide 42 through the section flow connection 33 therefore is enough to fill the additional storage tank 30. No other sources of carbon dioxide 42 are needed to fill the additional storage tank 30. Of course also the generated carbon dioxide 42 in the generation of carbon dioxide 23 can be used to fill the additional storage tank 30 (not shown). It is especially preferred that the semi-closed carbon dioxide cycle 22 is filled with carbon dioxide 42 from the additional storage tank 30 in advance of an operation of the cogeneration plant 1. This ensures that the semi-closed carbon dioxide cycle 22 is preferably completely filled with carbon dioxide 42 before the gas turbine engine 10 starts to burn fuel 40 with oxygen 41. To ensure that no air 43 is present in the semi-closed carbon dioxide cycle 22, a third control valve 35 is provided. Preferably, the first flow connection 31 is connected with the semi-closed carbon dioxide cycle 22 at a low point and the third control valve 35 is located at the semi-closed carbon dioxide cycle 22 at a high point. This allows a filling the semi-closed carbon dioxide cycle 22 from bottom to top, which uses the fact that carbon dioxide 42 is heavier than most components of air 43. Therefore, the air 43 is pushed aside in an upward direction to the third control valve 35. The third control valve 35 can comprise sensors to measure the carbon dioxide 42 content in the pushed out air 43 and can be closed if this content is too high to ensure an environmental friendly operation of the cogeneration plant 1. By providing an additional storage tank 30 with stored carbon dioxide 42 and by filling the semi-closed carbon dioxide cycle 22 in advance of an operation of the cogeneration plant 1 an environmental friendly and especially a zero emission operation of the cogeneration plant 1 can be ensured from the beginning of the operation of the cogeneration plant 1.

## Claims

1. Cogeneration plant (1) comprising a gas turbine engine (10), a heat recovery steam generator (17) and a division module (21) forming a semi-closed carbon dioxide cycle (22) of the cogeneration plant (1), the cogeneration plant (1) burning a mixture of fuel (40), oxygen (41) and a recirculated first flow of combustion gas (45) in a combustor (11) of the gas turbine engine (10), the heat recovery steam generator (17) arranged downstream of the gas turbine engine (10) receiving combustion gas (44) of the gas turbine engine (10) and the division module (21) arranged downstream of the heat recovery steam generator (17) dividing the combustion gas (44) into the first flow of combustion gas (45) recirculated to the gas turbine engine (10) and a second flow of combustion gas (46) for a generation (23) of carbon dioxide (42),
**characterized in that**
the cogeneration plant (1) comprises an additional storage tank (30) to store carbon dioxide (42) and a first flow connection (31), wherein the additional storage tank (30) is connected at least to the semi-closed carbon dioxide cycle (22) using the first flow connection (31), wherein the semi-closed carbon dioxide cycle (22) can be filled at least partly with carbon dioxide (42) provided by the additional storage tank (30).

2. Cogeneration plant (1) according to claim 1,
**characterized in that**
the cogeneration plant (1) comprises a first control valve (32) positioned in the first flow connection (31), wherein the first control valve (32) controls the filling of the semi-closed carbon dioxide cycle (22) with carbon dioxide (42).

3. Cogeneration plant (1) according to one of the preceding claims,
**characterized in that**
the cogeneration plant (1) comprises a second flow connection (33) between a compressor section (12) of the gas turbine engine (10) and the additional storage tank (30), wherein during operation of the cogeneration plant (1) the additional storage tank (30) can be filled with carbon dioxide (42) through the second flow connection (33).

4. Cogeneration plant (1) according to claim 3,
**characterized in that**
the cogeneration plant (1) comprises a second control valve (34) positioned in the second flow connection (33), wherein the second control valve (34) controls the filling of the additional storage tank (30) with carbon dioxide (42).

5. Cogeneration plant (1) according to one of the preceding claims,
**characterized in that**
the semi-closed carbon dioxide cycle (22), especially the heat recovery steam generator (17), comprises a third control valve (35) for bleeding air (43) during the filling process with carbon dioxide (42) from the additional storage tank (30).

6. Cogeneration plant (1) according to one of the preceding claims,
**characterized in that**
the first flow connection (31) is connected to the semi-closed carbon dioxide cycle (22) at a low point.

7. Cogeneration plant (1) according to one of the preceding claims,
**characterized in that**
the additional storage tank (30) can be filled with carbon dioxide (42) generated from the second flow of combustion gas (44).

8. Method to operate a cogeneration plant (1), the cogeneration plant (1) comprising at least the features of one of the preceding claims,
**characterized in that**
a starting procedure of the operation of the cogeneration plant (1) includes the following step:
- Filling of the semi-closed carbon dioxide cycle (22) at least partly with carbon dioxide (42), especially with pressurized carbon dioxide (42), from the additional storage tank (30).

9. Method to operate a cogeneration plant (1) according to claim 8,
**characterized in that**
the semi-closed carbon dioxide cycle (22) is filled with carbon dioxide (42) from the additional storage tank (30) from bottom or essentially from bottom to top.

10. Method to operate a cogeneration plant (1) according to one of the claims 8 or 9,
**characterized in that**
the filling of the semi-closed carbon dioxide cycle (22) with carbon dioxide (42) from the additional storage tank (30) can additionally be continued during the operation of the cogeneration plant (1).

11. Method to operate a cogeneration plant (1) according to one of the preceding claims 8 to 10,
**characterized in that**
a pressure of the carbon dioxide (42) in the additional storage tank (30) is kept lower than a maximum pressure reached in the gas turbine engine (10) during nominal operation.

12. Method to operate a cogeneration plant (1) according to one of the preceding claims 8 to 11,
**characterized in that**
the carbon dioxide (42) filled in the semi-closed carbon dioxide cycle (22) is heated, especially by a heater (24) arranged in the semi-closed carbon dioxide cycle (22), before entering the gas turbine engine (10).
